# EUROPÄISCHE PATENTSCHRIFT

(11) **EP 1 722 996 B1**
(45) Veröffentlichungstag und Bekanntmachung des Hinweises auf die Patenterteilung: **21.06.2017**
(21) Anmeldenummer: 05706755.5
(22) Anmeldetag: 05.02.2005
(51) Int. Cl.: B60L 13/04, H01F 27/28

(54) **MAGNETPOL FÜR MAGNETSCHWEBEFAHRZEUGE**
MAGNETIC POLE FOR MAGNETIC LEVITATION VEHICLES
POLE MAGNETIQUE POUR VEHICULES A SUSTENTATION MAGNETIQUE

(30) Priorität: 09.03.2004 DE 102004011941
(43) Veröffentlichungstag der Anmeldung: 22.11.2006
(73) Patentinhaber: ThyssenKrupp Transrapid GmbH, 34127 Kassel (DE)
(72) Erfinder: HAHN, Wolfgang, 34125 Kassel (DE); ZHENG, Qinghua, 82024 Taufkirchen (DE); MILLER, Luitpold, 85521 Ottobrunn (DE)
(74) Vertreter: Lorenz, Bernd Ingo Thaddeus
(86) Internationale Anmeldenummer: PCT/DE2005/000218
(87) Internationale Veröffentlichungsnummer: WO 2005/087533

(56) Entgegenhaltungen:
- JP-A- 09 246 037
- JP-A- 11 111 084
- US-A- 5 274 904

## Beschreibung

Die Erfindung betrifft einen Magnetpol gemäß der im Oberbegriff des Anspruchs 1 angegebenen Gattung.

Magnetpole dieser Art werden bei Magnetschwebefahrzeugen in vielfältiger Form eingesetzt, z. B. als Teile von Trag-, Führ- oder Bremsmagneten. Bisher werden diese Magnetpole aus einem auf Massepotential liegenden Eisenkern und einer auf diesen aufgebrachten Wicklung hergestellt, die aus abwechselnd aufeinander folgenden Lagen eines Leiters und eines Isolators gebildet ist (PCT WO 97/30 504 und US 5,274,904). Die Leiter und Isolatoren bestehen dabei aus band- bzw. streifenförmigen Materialien, z. B. Aluminiumbändern und dünnen Isolierfolien. Zwischen der ersten, an den Kern grenzenden Lage des Leiterbandes und dem Kern ist außerdem in der Regel eine um den Mantel des Kern gelegte Isolationsschicht vorgesehen.

Aufgrund der im wesentlichen rechteckigen Form des Leiterbandes führen dessen an den Kern grenzende Längsränder zu einer scharfkantigen Wicklungsgeometrie, die bei Benutzung des Magnetpols eine Verdichtung der elektrischen Feldstärke und Spitzenentladungen an diesen Stellen zur Folge haben. Da in diesen Bereichen außerdem hohe, bis in den Kilovoltbereich führende Spannungen auftreten, können Isolationsschäden, die den Magnetpol unbrauchbar machen, nicht sicher vermieden werden. Das gilt insbesondere dann, wenn in Trag- oder Führmagnetsystemen eine Mehrzahl von Magnetpolen in Reihe geschaltet ist und parasitäre Kapazitäten zusammen mit den Induktivitäten der Magnetpole zu unerwünschten Resonanzschwingungen führen.

Die JP 9-246037 A beschäftigt sich mit der Ausgestaltung einer supraleitenden Spule, bei der die Gefahr eines Quenschens, d. h. eines Überganges von einem supraleitenden zu einem normalen Zustand reduziert werden soll. Dazu wird vorgeschlagen, die gesamte Spule im Querschnitt trapezförmig auszugestalten, wobei die Breite der Spule nach außen hin zunimmt. Die Herstellung einer solchen supraleitenden Spule ist jedoch aufwendig, weil eine spezielle Anpassung der gesamten Geometrie notwendig ist.

Der Erfindung liegt das technische Problem zugrunde, beim Magnetpol der eingangs bezeichneten Gattung Isolationsstörungen durch an Spitzen od. dgl. auftretende Feldstärkenverdichtungen zu reduzieren bzw. ganz zu vermeiden.

Zur Lösung dieser Aufgabe dienen die kennzeichnenden Merkmale des Anspruchs 1.

Die Erfindung bringt den Vorteil mit sich, dass durch das Zuschneiden des Leiterbandes eine vorgewählte Wicklungsgeometrie in dem an den Kern grenzenden Bereich erzwungen wird, aufgrund derer die scharfkantigen seitlichen Ränder der dem Kern nahen Lagen des Leitungsbandes jeweils von der nächsten, weiter vom Kern beabstandeten Lage überdeckt und in ihrer Wirkung daher weitgehend unschädlich gemacht werden.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
- **Fig. 1**: in perspektivischer Darstellung die Bewicklung eines üblichen, einen Kern und eine einscheibige Wicklung aufweisenden Magnetpols;
- **Fig. 2**: schematisch die Wicklungsgeometrie einer Hälfte des Magnetpols nach Fig. 1 in einem an den Kern grenzenden Bereich als Teilschnitt längs der Linie II-II der Fig. 1;
- **Fig. 3**: einen der Fig. 2 entsprechenden, jedoch vergrößerten Teilschnitt durch einen Magnetpol mit einer erfindungsgemäßen Wicklungsgeometrie;
- **Fig. 4**: in einem Teilschnitt entsprechend Fig. 3 ein weiteres Ausführungsbeispiel des erfindungsgemäßen Magnetpols und
- **Fig. 5**: in einem Fig. 3 und 4 entsprechenden Teilschnitt ein drittes Ausführungsbeispiel des erfindungsgemäßen Magnetpols.

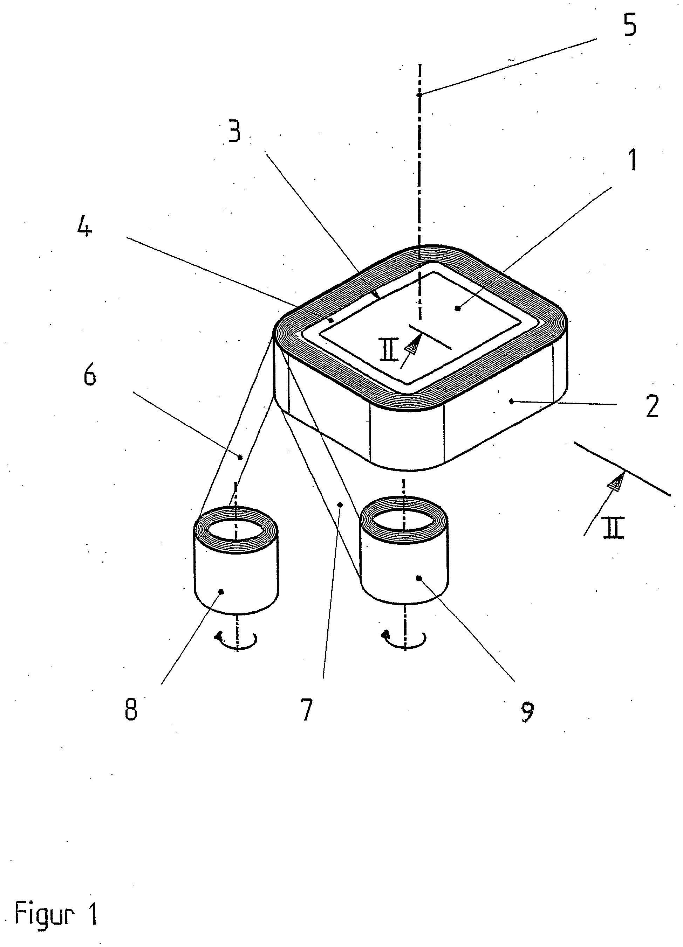

Ein Magnetpol der hier interessierenden Art enthält nach Fig. 1 einen aus einem Blechpaket bestehenden, vorzugsweise quaderförmigen Eisenkern 1 mit abgerundeten Ecken und eine auf diesen aufgebrachte Wicklung 2. Die Herstellung des Kerns 1 kann auf viele verschiedene Arten erfolgen und ist für die vorliegende Erfindung unbedeutend. Außerdem kann der Kern 1 mit einem umlaufenden, an seiner Mantelfläche anliegenden Isolationsschicht 3 versehen sein, die aus einem z. B. aus Kunststoff hergestellten Isoliermaterial besteht und auch als Wicklungsträger ausgebildet sein kann, der Montageflansche 4 aufweist, zwischen denen die Wicklung 2 zu liegen kommt. Die Isolationsschicht 3 dient sowohl zur Montage der Wicklung 2 als auch zur elektrischen Isolierung der Wicklung 2 gegen den Kern 1 in radialer Richtung, bezogen auf eine Mittel- und Wickelachse 5 des Kerns 1.

Die Wicklung 2 wird z. B. durch abwechselnd aufeinander folgende Lagen aus einem Leitungsband 6 (z. B. Aluminium) und zwischen diesen angeordneten, weiteren Isolationsschichten 7 in Form einer Isolierfolie od. dgl. gebildet, die die Lagen in radialer Richtung elektrisch gegeneinander isolieren. Bei der Herstellung des Magnetpols 1 werden die Leitungsbänder 6 und die Isolationsschichten 7 z. B. in bekannter Weise von Vorratsspulen 8, 9 abgewickelt und koaxial um die Mittelachse 5 auf den Kern 1 gewickelt. Die dadurch erhaltene Wicklung 2 besteht daher aus einer zur Mittelachse 5 koaxialen Scheibe, die in radialer Richtung eine Vielzahl von Lagen aufweist.

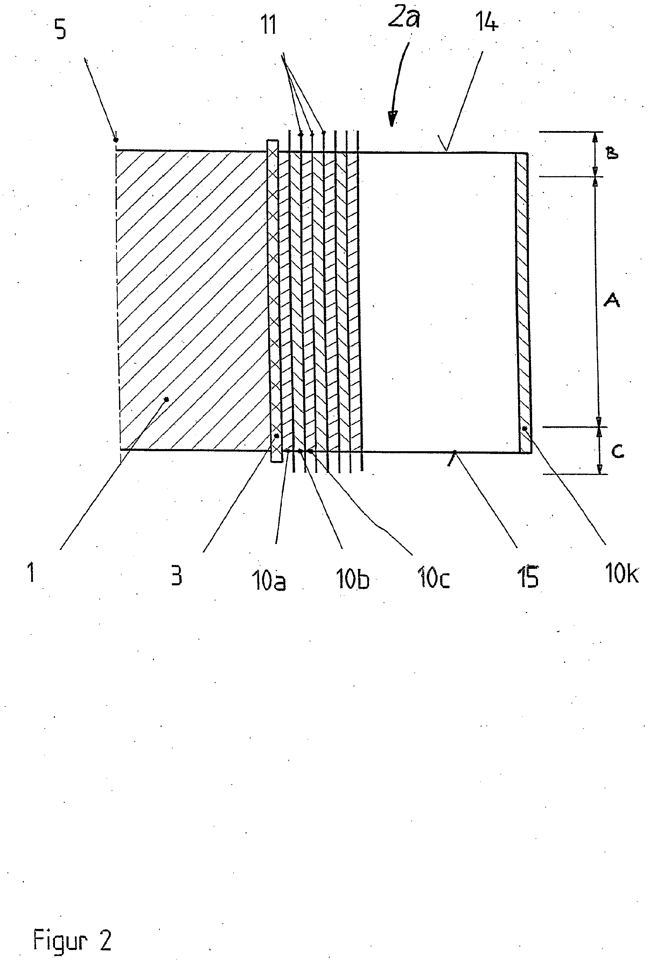

Der Magnetpol weist nach Fig. 2, die in einem Teilschnitt einen rechts von der Mittelachse 5 liegenden Wicklungsabschnitt 2a zeigt, eine Vielzahl von Lagen 10 auf, die z. B. einzeln mit den Bezugszeichen 10a bis 10k bezeichnet sind. Dabei liegt die Lage 10a unmittelbar am Kern 1 bzw. der Isolationsschicht 3 an. Zwischen den einzelnen Lagen 10 sind jeweils durch Linien angedeutete Isolationsschichten 11 vorhanden, die die Lagen 10 in radialer Richtung elektrisch gegeneinander isolieren.

Die innerste Lage 10a und die äußerste Lage 10k sind mit nicht dargestellten, elektrischen Anschlüssen versehen, die dem Anlegen einer Klemmenspannung dienen.

Der Magnetpol besitzt eine Höhe, die parallel zur Mittelachse 5 und zwischen zwei Längsrändern 14 und 15 des die Lagen bildenden Leitungsbandes gemessen wird und somit der Breite des Leitungsbandes entspricht. Ein mittlerer, in Fig. 2 mit dem Buchstaben A bezeichneter Abschnitt des Leitungsbandes ist im Hinblick auf Spitzenfeldstärken vergleichsweise unkritisch. Dagegen zeichnen sich mit dem Buchstaben B und C versehene Abschnitte, die sich beidseitig je eines der Längsränder 14, 15 des Leitungsbandes erstrecken, durch Kanten und Spitzen aus, die unkontrollierbare, hohe Verdichtungen der elektrischen Feldstärke verursachen können. Ein Grund hierfür sind einerseits scharfe, an die Längsränder 14, 15 grenzende Schnittkanten des Leitungsbandes, andererseits Höhentoleranzen und Ungenauigkeiten beim Bewickeln des Kerns 1. Alles dies kann dazu führen, dass im Bereich der Längsränder 14, 15 mäander- und sägezahnförmige Konturen mit sehr kleinen Radien vorhanden sind, die in den dem Kern 1 nahen Bereichen zu den beschriebenen Störungen führen.

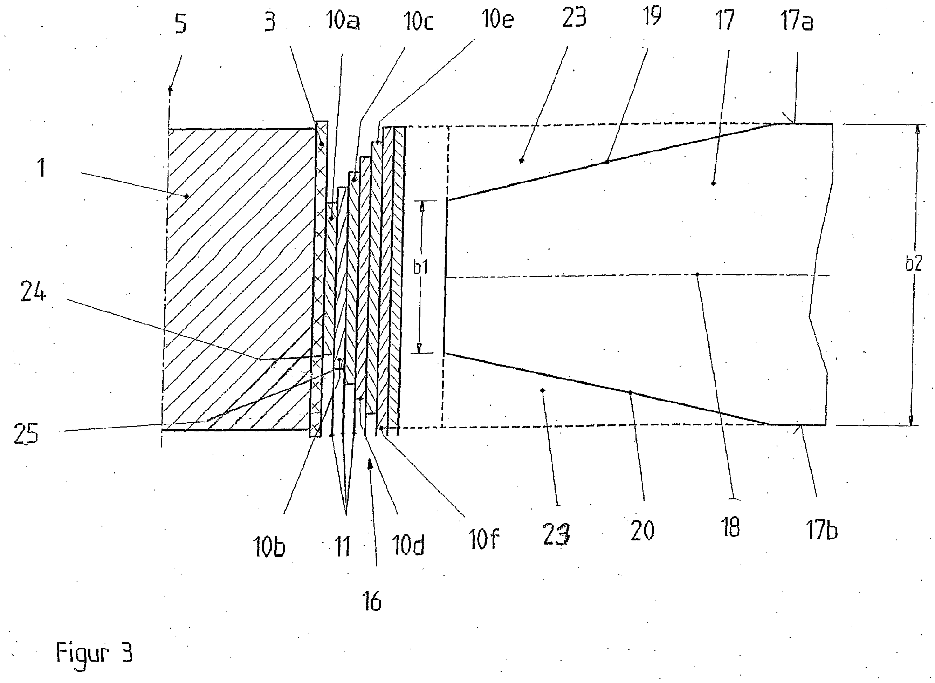

Erfindungsgemäß ist der Magnetpol daher z. B. gemäß Fig. 3 ausgebildet. Er unterscheidet sich vom Magnetpol nach Fig. 1 und 2 wesentlich dadurch, dass seine Wicklung 16 aus einem Leitungsband 17 hergestellt ist, das in dem an den Kern 1 grenzenden Bereich keilförmig und so zugeschnitten ist, dass seine parallel zur Mittelachse 5 gemessene Breite vom Kern 1 an nach außen hin allmählich von einem mittleren Wert bl bis zu einem im wesentlichen der Kernhöhe entsprechenden Höchstwert b2 zunimmt. Dabei ist in Fig. 3 neben dem entsprechend Fig. 2 dargestellten Schnittbild eine Draufsicht auf einen den Zuschnitt aufweisenden Teil des Leitungsbandes 17 dargestellt. Der genannte Höchstwert b2 wird vorzugsweise nicht erst am freien, radial außen liegenden Ende des Leitungsbandes 17, sondern, in Richtung einer senkrecht zur Mittelachse 5 verlaufenden Längsachse 18 des Leiterbandes 17 betrachtet, bereits nach einer Länge erreicht, die einer Anzahl von Lagen 10a, 10b usw. entspricht, die kleiner, vorzugsweise wesentlich kleiner als die Zahl der insgesamt vorhandenen Lagen 10 ist. Beim Vorhandensein von z. B. 100 bis 300 Lagen 10 kann der Höchstwert b2 beispielsweise bereits nach maximal etwa zehn Lagen 10 erreicht sein. Beim Ausführungsbeispiel nach Fig. 3 ist der Höchstwert b2 bereits nach ca. sechs Lagen, d. h. bei der Lage 10f erreicht. Ab dieser Stelle entspricht die Breite des Leitungsbandes 17 dann konstant dem Wert b2.

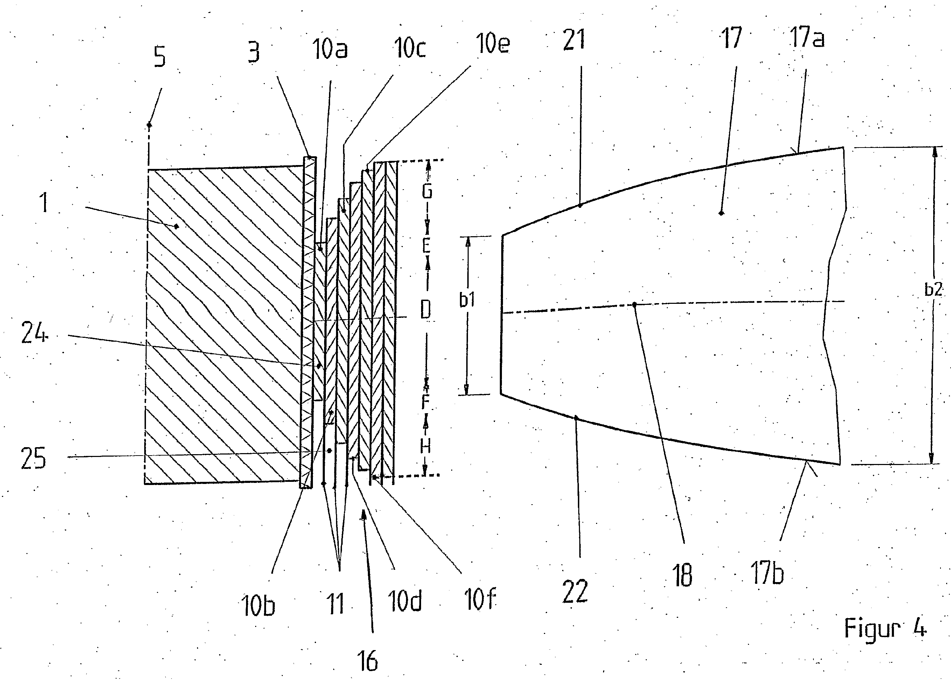

Die zunehmende Breite des Leitungsbandes 17 wird durch einen in Fig. 3 längs Geraden 19, 20 verlaufenden Zuschnitt seiner Längsränder 17a, 17b in einem dem Kern 1 nahen Abschnitt erreicht. Alternativ kann das Zuschneiden der Längsränder 17a, 17b aber auch, wie Fig. 4 zeigt, längs stetig verlaufender Kurven 21, 22 erfolgen, denen jeder zweckmäßige Verlauf gegeben werden kann.

Das beschriebene Zuschneiden der Seitenränder 17a, 17b unter Bildung dreieckförmiger, in Fig. 3 gestrichelt dargestellter Abfallstücke 23 bzw. entsprechender Aussparungen führt dazu, dass die Lagen 10a, 10b .... 10k eine allmählich zunehmende Höhe erhalten. Dabei wird die Steigung der Geraden 19, 20 bzw. Kurven 21, 22 mit besonderem Vorteil so gewählt, dass dem Kern 1 bei den ersten Lagen jeweils nur eine Ecke bzw. scharfe Kante (z. B. 24, 25 in Fig. 3) zugeordnet ist, die bereits von der nachfolgenden Lage flächig abgedeckt wird. So wird z. B. die Kante 24 der Lage 10a von der Lage 10b und die Kante 25 der Lage 10b von der Lage 10c abgedeckt usw., wodurch die schädlichen Spitzenentladungen weitgehend reduziert werden. Dies gilt insbesondere bei Berücksichtigung des Umstandes, dass die Leitungsbänder 17 vergleichsweise dünn sind (z. B. 0,2 mm) und daher die hier auftretenden Feldstärkenverdichtungen bei Kombinationen Platte/Spitze wenigstens etwa dreimal so groß wie bei einer Kombination Platte/Platte sind. Außerdem kann durch die beschriebene Ausbildung der Zuschnitte sichergestellt werden, dass die kleinste Breite bl des Leitungsbandes 17 unter Berücksichtigung der oben beschriebenen, der Abdeckung dienenden Geometrie nur um so viel kleiner als die maximale Breite b2 ist, dass die damit verbundene Vergrößerung des ohmschen Widerstandes keine wesentlichen Nachteile im Hinblick auf die Abfuhr der Verlustwärme über den Kern 1 in radialer Richtung zur Folge hat.

Die mit der Erfindung erzielten Vorteile sind insbesondere aus Fig. 4 ersichtlich, in die analog zu Fig. 2 Zonen D bis H eingezeichnet sind. Dabei ist die Zone D unkritisch entsprechend der Zone A in Fig. 2. E und F bezeichnen zwei Zonen, die analog zu den Zonen B und C in Fig. 2 sind, aber hier einen Bereich mit reduzierter Feldstärkebelastung bezeichnen. Die Zonen G und H sind ebenfalls weitgehend unkritisch, da die Feldstärkenbelastung in ihnen stufenweise abnimmt.

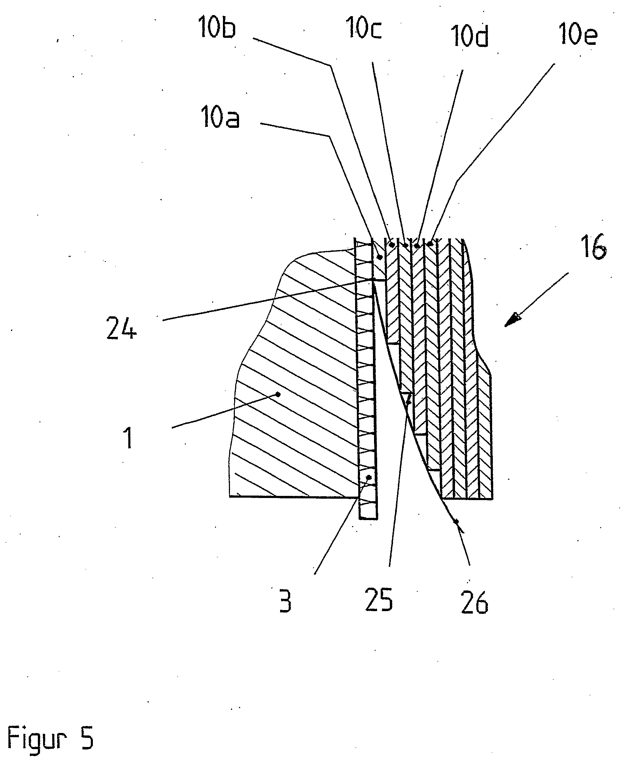

Weitere Vorteile der Erfindung bestehen darin, dass durch die Vermeidung von Isolationsdurchbrüchen eine höhere Betriebssicherheit, eine Reduzierung von Alterungseffekten und eine Vergrößerung der Nennwerte für Corona- und Teilentladungen erhalten werden. Dabei ist klar, dass die Geometrie der aus Fig. 3 und 4 ersichtlichen Abstufungen im Bereich der ersten Lagen 10a bis 10e im Prinzip beliebig gewählt und weitgehend den magnetischen Bedürfnissen angepasst werden kann. Weiter ist es möglich, zwischen der Isolationsschicht 3 des Kerns 1 und der ersten Lage 10a gemäß Fig. 5 noch eine über die Höhe des Kerns 1 durchgehende, teilleitfähige Folie 26 vorzusehen, die z. B. aus einem mit Russ versetzten, organischen Isolierstoff besteht und dazu geeignet ist, kapazitive Ströme abzuleiten, Betriebsströme dagegen nicht durchzulassen. Die Folie 26 kann nach dem Bewickeln des Kerns 1 entsprechend Fig. 5 gegen die Kanten und Ecken 24, 25 usw. gelegt werden, um dadurch eine Abrundung und Vergleichmäßigung der abgestuften Bereiche in der Nähe des Kerns 1 zu erhalten und die Gefahr von Spitzenentladungen weiter zu reduzieren.

Ein besonders wesentlicher Vorteil der Erfindung besteht schließlich darin, dass die um den Kern 1 gewickelte Isolationsschicht 3 nicht, was auch möglich wäre, zur Vermeidung von Isolierungsfehlern dicker als üblich ausgebildet werden muss. Dies würde zwar Isolationsdurchbrüche ebenfalls vermeiden, aber auch die Abführung der in der Wicklung 17 erzeugten Verlustwärme über den Kern 1 erschweren.

Die Ränder 17a, 17b des Leitungsbandes 17 können erfindungsgemäß gleich oder unterschiedlich zugeschnitten bzw. besäumt werden. Mit besonderem Vorteil erfolgt das Zuschneiden der Längsränder 17a, 17b spiegelsymmetrisch zur Längsachse 18 des Leitungsbandes 17.

Die Erfindung ist nicht auf die beschriebenen Ausführungsbeispiele beschränkt, die auf vielfache Weise abgewandelt werden können. Dies gilt insbesondere für die im Einzelfall gewählte und ggf. durch Optimierungsrechnungen erhaltene Form der Linien 19, 20 bzw. 21, 22 bzw. der gebildeten Abfallstücke 23. Weiter ist es möglich, den Magnetpol aus zwei oder mehr, in Richtung der Mittelachse 5 übereinander liegenden und durch weitere Isolationsschichten getrennten Scheiben auszubilden, in welchem Fall jede Scheibe entsprechend Fig. 3 bis 5 ausgebildet, d. h. aus in Kernnähe entsprechend zugeschnittenen Leitungsbändern bestehen würde. Schließlich versteht sich, dass die verschiedenen Merkmale auch in anderen als den beschriebenen und dargestellten Kombinationen angewendet werden können.

## Patentansprüche

1. Magnetpol für Magnetschwebefahrzeuge mit einem eine Mittelachse (5) aufweisenden Kern (1) und einer auf diesen aufgebrachten Wicklung (16) in Form einer Scheibe, die aus einem in mehreren Lagen (10) um den Kern (1) gewickelten Leitungsband (17) gebildet ist, **dadurch gekennzeichnet, dass** das Leitungsband (17) an seinen in Richtung der Mittelachse (5) beabstandeten Längsrändern (17a, 17b) derart zugeschnitten ist, dass seine Breite vom Kern (1) aus nach außen hin stetig bis zu einem Höchstwert (b2) zunimmt, wobei der Höchstwert (b2) der Breite, in Längsrichtung des Leitungsbandes (17) betrachtet, nach einer Länge erreicht ist, die einer Anzahl von Lagen (10) entspricht, die kleiner als die Zahl der insgesamt vorhandenen Lagen (10a .... 10k) ist.

2. Magnetpol nach Anspruch 1, **dadurch gekennzeichnet, dass** der Höchstwert (b2) der Breite nach einer etwa zehn Lagen (10) entsprechenden Länge des Leitungsbandes (17) erreicht ist.

3. Magnetpol nach Anspruch 1 oder 2, **dadurch gekennzeichnet, dass** die Längsränder (17a, 17b) des Leitungsbandes (17) spiegelsymmetrisch zu einer senkrecht zur Mittelachse (5) erstreckten Längsachse (18) des Leitungsbandes (17) zugeschnitten sind.

4. Magnetpol nach einem der Ansprüche 1 bis 3, **dadurch gekennzeichnet, dass** die Längsränder (17a, 17b) längs Geraden (18, 19) zugeschnitten sind.

5. Magnetpol nach einem der Ansprüche 1 bis 3, **dadurch gekennzeichnet, dass** die Längsränder (17a, 17b) längs stetiger Kurven (20, 21) zugeschnitten sind.

6. Magnetpol nach einem der Ansprüche 1 bis 5, **dadurch gekennzeichnet, dass** der Kern (1) an seiner Mantelfläche mit einer Isolationsschicht (3) umwickelt und zwischen der Isolationsschicht (3) und der an diese grenzenden Lage (10a) der Scheibe eine teilleitfähige Folie (26) angeordnet ist, die an zwischen den einzelnen Lagen (10) durch das Zuschneiden des Leitungsbandes (17) gebildeten Stufen (24, 25) anliegt.

7. Magnetpol nach einem der Ansprüche 1 bis 6, **dadurch gekennzeichnet, dass** er wenigstens zwei Scheiben mit aus je einem Leitungsband (17) gebildeten Lagen (10) aufweist und die Leitungsbänder (17) aller Scheiben nach einem oder mehreren der Ansprüche 1 bis 6 zugeschnitten sind.

## Claims

1. A magnetic pole for magnetic levitation vehicles with a core (1) having a centre axis (5) and a winding (16) applied to the same in the form of a disc, which is formed of a conduction band (17) wound in several layers (10) around the core (1), **characterised in that** the conduction band (17), at its longitudinal edges (17a, 17b) which are spaced apart in direction of the centre axis (5), is adapted such that its width, from the core (1) towards the outside, steadily increases up to a maximum value (b2), wherein, viewed in longitudinal direction of the conduction band (17), the maximum value (b2) of the width is achieved after a length which corresponds to a number of layers (10) smaller than the total of all existing layers (10a ... 10k).

2. The magnetic pole according to claim 1, **characterised in that** the maximum value (b2) of the width is achieved after a conduction band (17) length corresponding to approximately ten layers (10).

3. The magnetic pole according to claim 1 or 2, **characterised in that** the longitudinal edges (17a, 17b) of the conduction band (17) are adapted mirror-symmetrically to a longitudinal axis (18) of the conduction band (17), which extends at right angles to the centre axis (5).

4. The magnetic pole according to one of claims 1 to 3, **characterised in that** the longitudinal edges (17a, 17b) are adapted along straights (18, 19).

5. The magnetic pole according to one of claims 1 to 3, **characterised in that** the longitudinal edges (17a, 17b) are adapted along steady curves (20, 21).

6. The magnetic pole according to one of claims 1 to 5, **characterised in that** the core (1) has an insulation layer (3) wrapped around it on its outer surface, with a partially conductive film (26) arranged between the insulation layer (3) and the adjacent layer (10a) of the disc, wherein the film (26) is in contact with steps (24, 25) formed between individual layers (10) as a result of the adaptation of the conduction band (17).

7. The magnetic pole according to one of claims 1 to 6, **characterised in that** it comprises at least two discs with layers (10) each formed of a conduction band (17) and the conduction bands (17) of all discs are adapted according to one or more of claims 1 to 6.

## Revendications

1. Pôle magnétique pour véhicules à sustentation magnétique avec un noyau (1) présentant un axe central (5) et un enroulement (16) appliqué sur le noyau sous la forme d'un disque, lequel est formé par un ruban conducteur (17) enroulé en plusieurs couches (10) autour du noyau (1),
**caractérisé en ce que** le ruban conducteur (17) est coupé au niveau de ses bords longitudinaux (17a, 17b) espacés en direction de l'axe central (5) d'une manière telle, que sa largeur augmente en continu à partir du noyau (1) vers l'extérieur jusqu'à une valeur maximale (b2), dans lequel la valeur maximale (b2) de la largeur, lorsque vue en direction longitudinale du ruban conducteur (17), est atteinte après une longueur qui correspond à un nombre de couches (10) qui est inférieur au nombre de couches (10a ... 10k) existant au total.

2. Pôle magnétique selon la revendication 1, **caractérisé en ce que** la valeur maximale (b2) de la largeur est atteinte après une longueur du ruban conducteur (17) correspondant environ à dix couches (10).

3. Pôle magnétique selon la revendication 1 ou 2, **caractérisé en ce que** les bords longitudinaux (17a, 17b) du ruban conducteur (17) sont coupés en symétrie spéculaire à un axe longitudinal (18), étendu perpendiculairement à l'axe central (5), du ruban conducteur (17).

4. Pôle magnétique selon l'une des revendications 1 à 3, **caractérisé en ce que** les bords longitudinaux (17a, 17b) sont coupés le long de lignes droites (18, 19).

5. Pôle magnétique selon l'une des revendications 1 à 3, **caractérisé en ce que** les bords longitudinaux (17a, 17b) sont coupés le long de courbes (20, 21) continues.

6. Pôle magnétique selon l'une des revendications 1 à 5, **caractérisé en ce que** le noyau (1) est enveloppé au niveau de sa surface enveloppante par une couche d'isolation (3) et **en ce que**, entre la couche d'isolation (3) et la couche (10a) jouxtant celle-ci du disque, une feuille partiellement conductrice (26) est disposée, laquelle repose contre des gradins (24, 25) entre les couches individuelles (10) formés par la coupe du ruban conducteur (17).

7. Pôle magnétique selon l'une des revendications 1 à 6, **caractérisé en ce qu'**il présente au moins deux disques avec des couches (10) formées à partir d'un ruban conducteur respectif (17) et **en ce que** les rubans conducteurs (17) de tous les disques sont coupés selon l'une ou plusieurs des revendications 1 à 6.
